# EUROPÄISCHE PATENTSCHRIFT

(11) **EP 1 282 544 B1**
(45) Veröffentlichungstag und Bekanntmachung des Hinweises auf die Patenterteilung: **19.07.2006**
(21) Anmeldenummer: 01951486.8
(22) Anmeldetag: 08.05.2001
(51) Int. Cl.: B60T 8/36, G01L 9/00

(54) **BREMSVORRICHTUNG MIT INTEGRIERTEM DRUCKSENSORMODUL**
BRAKING DEVICE COMPRISING AN INTEGRATED PRESSURE SENSOR MODULE
DISPOSITIF DE FREINAGE A MODULE CAPTEUR DE PRESSION INTEGRE

(30) Priorität: 11.05.2000 DE 10022911; 13.12.2000 DE 10062051; 16.01.2001 DE 10101928; 21.02.2001 DE 10108374
(43) Veröffentlichungstag der Anmeldung: 12.02.2003
(73) Patentinhaber: Continental Teves AG & Co. oHG, 60488 Frankfurt (DE)
(72) Erfinder: JÜRGENS, Michael, 61200 Wölfersheim (DE); RISCH, Stephan, 64331 Weiterstadt (DE); MEYER, Holger, 65760 Eschborn (DE); BRIESEWITZ, Rüdiger, 60385 Frankfurt/Main (DE)
(86) Internationale Anmeldenummer: PCT/EP2001/005206
(87) Internationale Veröffentlichungsnummer: WO 2001/085511

(56) Entgegenhaltungen:
- WO-A-00/02755
- WO-A-00/17025
- WO-A-00/63665
- WO-A-01/60669
- WO-A-96/33081
- DE-A- 3 919 760
- US-A- 6 059 381

## Beschreibung

Die Erfindung betrifft eine Vorrichtung zum Bremsen gemäß Oberbegriff von Anspruch 1.

Moderne hydraulische oder elektrohydraulische Bremsanlagen für Kraftfahrzeuge sind mit elektronisch geregelten Vorrichtungen zur Steuerung der Hydraulik (Steuergeräte) ausgestattet, mit denen sich die Bremskraft an den Rädern durch Druck-Aufbau oder -Abbau in der zu den Bremszylindern führenden Hydraulikleitungen in Abhängigkeit von Sensoren zur Messung des Fahrzustands einstellen läßt.
Es sind zum einen Steuergeräte mit einer Regelung zur Vermeidung bzw. Verringerung von unerwünschtem Radschlupf bekannt (z.B. ABS) aber auch erweiterte komplexere Systeme zur Regelung der Fahrdynamik, die in kritischen Fahrsituationen aktiv Bremsdruck an bestimmten Rädern aufbauen können (ESP, TCS). Im Zuge der allgemeinen Miniaturisierung und Kostensenkung sind die vorstehend erwähnten Steuergeräte für Bremsen in letzter Zeit immer kleiner und kompakter geworden.

Derartige Steuergeräte (Integrierter Regler) bestehen aus im wesentlichen zwei Funktionsblöcken: Einer hydraulischen Kontrolleinheit (Ventilblock, HCU) mit den hydraulischen Ventilen und einer elektronischen Einheit (ECU), welche die gesamte Elektronik, wie etwa elektromagnetische Spulen, Leistungshalbleiter und Mikrocontroller umfaßt. Der hydraulische Druckaufbau erfolgt je nach Betriebsmodus der Bremse entweder im Hauptzylinder, welcher mit einem Bremspedal verbunden ist, oder durch einen Pumpenmotor, der auf der dem elektronischen Regler gegenüberliegenden Seite angeordnet ist.

Aus der WO 96/33081 A1 ist eine solche gattungsbildende hydraulische Kraftfahrzeugbremsanlage mit Bremsschlupfregelung und automatischem Bremseneingriff zur Antriebs- und/oder Fahrdynamikregelung bekannt. Diese Bremsanlage weist einen Bremsdruckgeber, der über Druckmodulationsventile mit wenigstens einer Radbremse und einem Druckmittelspeicher hydraulisch verbindbar ist, mit wenigstens einer Pumpe, die mit ihrer Saugseite an den Druckmittelspeicher und mit ihrer Druckseite mit einem vom Bremsdruckgeber zur Radbremse führenden Druckmittelpfad in Verbindung steht, der die Druckmodulationsventile und einem zwischen dem Bremsdruckgeber und den Druckmodulationsventilen am Druckmittelpfad angeschlossenen Drucksensor auf.

Aus der WO 00/02755 A1 ist ferner ein Bremsdrucksteuergerät bekannt, wobei in einem Gehäuse angeordneten Aufnahmebohrungen für Druckmodulationsventile, mit in das Gehäuse führenden Drucksensoranschlußöffnungen, in die Drucksensoren zur Erfassung des Drucks in einem gehäuseseitigen, jeweils mit einem Bremsdruckgeber verbundenen Druckmittelpfad eingesetzt sind.

Darüber hinaus sind aus der WO 00/17025 A1 Verbesserungen an elektro-hydraulischen Bremsanlagen bekannt, wobei ein oder mehrere Drucksensoren zu einem Bauteil zusammengefaßt sind.

Wie bereits ausgeführt, bestehen die Steuergeräte aus zwei Gehäuseeinheiten, die bei der Fertigung zusammengesteckt werden. Der elektronische Regler faßt die gesamte Elektronik des Steuergeräts, wie elektromagnetische Spulen zur Ansteuerung der Ventile, elektrische Kontakte, Leistungshalbleiter und Mikrocontroller, in der Regel auf einer einzigen Leiterplatte zusammen. Während des Zusammenfügens von Reglergehäuse und Ventilblock werden die Ventilspulen und die Ventile übereinander geschoben und gleichzeitig alle notwendigen elektrischen Kontakte zwischen Ventilblock und der Leiterplatte hergestellt (Prinzip des magnetischen Steckers).

In einigen Ausführungsvarianten werden die elektrischen Zuführungen über einen stabförmigen Motorstecker durch eine Bohrung im hydraulischen Teil des Steuergeräts geführt. Dieser ragt beim Zusammenfügen des magnetischen Steckers aus dem hydraulischen Block heraus, so daß die Kontaktierung des Hydraulikmotors ebenfalls beim Zusammenfügen des magnetischen Steckers erfolgen kann.

Es hat sich gezeigt, daß für die anstehenden vielfältigen Regelungsaufgaben neuerer verbesserter Bremsensteuergeräte zusätzliche Druckinformationen aus dem hydraulischen Teil der Regelungsvorrichtung benötigt werden. Dies gilt in gleichem Maße für heute verbreitete elektronische Bremssysteme mit rein hydraulischer Übertragung des Bremsdrucks, als auch für zukünftige Bremsanlagen, bei denen die angeforderte Bremskraft im wesentlichen elektrisch an die Bremsenaktuatorik (z.B. Steuergerät mit Druckspeicher) übertragen wird (elektrohydraulische Bremse (EHB) oder Bremssysteme mit aktiver hydraulischer Bremskraftunterstützung (OHBV).

Es ist bekannt, in herkömmlichen hydraulischen Bremsanlagen, von denen die Erfindung ausgeht, den Druck des hydraulischen Fluids außerhalb des integrierten Steuergeräts zu messen, z.B. im Bereich des Tandem-Hauptzylinders (THZ). Es ist üblich, daß der Drucksensor hierzu am THZ mittels einer Schraubverbindung verbunden wird.

Die Aufgabe der vorliegenden Erfindung besteht nun darin, eine Bremsvorrichtung anzugeben, die gegenüber bekannten Bremsvorrichtung mit einer Einrichtung zur Druckmessung ausgestattet ist, ohne daß das Ziel einer kompakten Bauweise und kostengünstigen Herstellung aus dem Auge verloren wird. Hierbei steht die konstruktive Erweiterung der Funktionalität eines bereits vorliegenden hochintegrierten Steuergeräts unter Ausnutzung eines geringen zur Verfügung stehende Bauraums im Vordergrund.

Diese Aufgabe wird durch die Vorrichtung gemäß Anspruch 1 gelöst.

Die vorliegende Erfindung gibt eine Vorrichtung an, die eine einfachere, robustere, kostengünstigere und auch zuverlässige Anbindung von Drucksensoren an die Hydraulik-Einheit ermöglicht und gleichzeitig eine Möglichkeit zum weiter unten näher beschriebenen Toleranzausgleich bei der Montage von Reglergehäuse und Ventilblock schafft.

Vorteilhafte Ausgestaltungen der Erfindung ergeben sich aus den Unteransprüchen und der weiter unten folgenden Figurenbeschreibung.

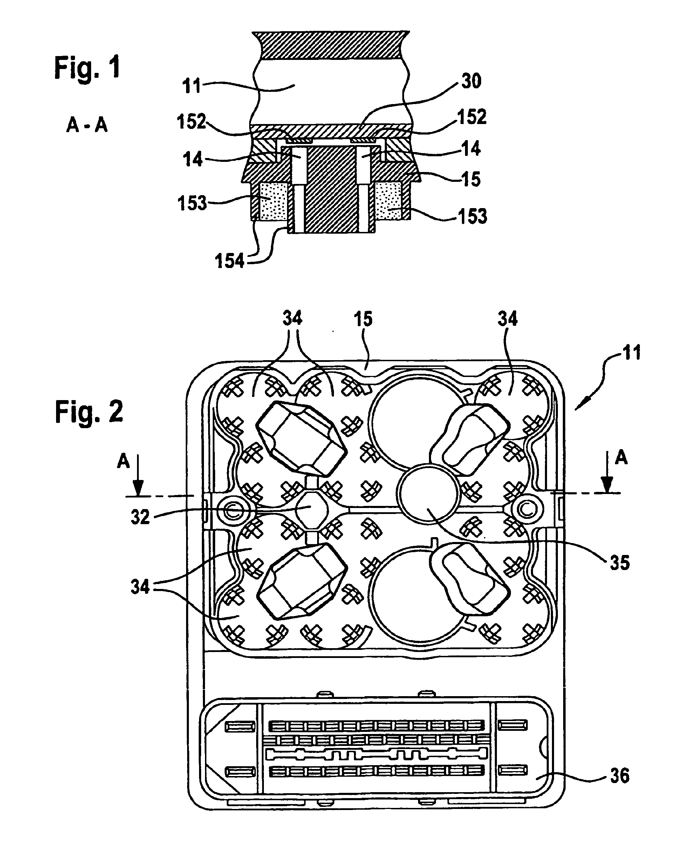

Nach der in den Figuren 1 bis 6 dargestellten Lösung ist der Drucksensor 19 mit dem Ventilblock 12 über eine Bohrung im Ventilblock, beispielsweise mittels einer Clinch-Verbindung mechanisch und hydraulisch angebunden. Auf einer dem Gehäuse des elektronischen Reglers 11 zugewandten Seite des Drucksensors besitzt dieser einen elektrischen Kontakt mit Federelementen zur Bildung eines verschiebbaren Kontakts nach dem Zusammenstecken des Ventilblocks mit dem Regler. Nach dem Zusammenfügen des Reglers und des Ventilblocks wird der Drucksensor durch das Reglergehäuse geführt und ist im Steuergerät somit vollständig integriert (Fig. 2, 5 und 6).

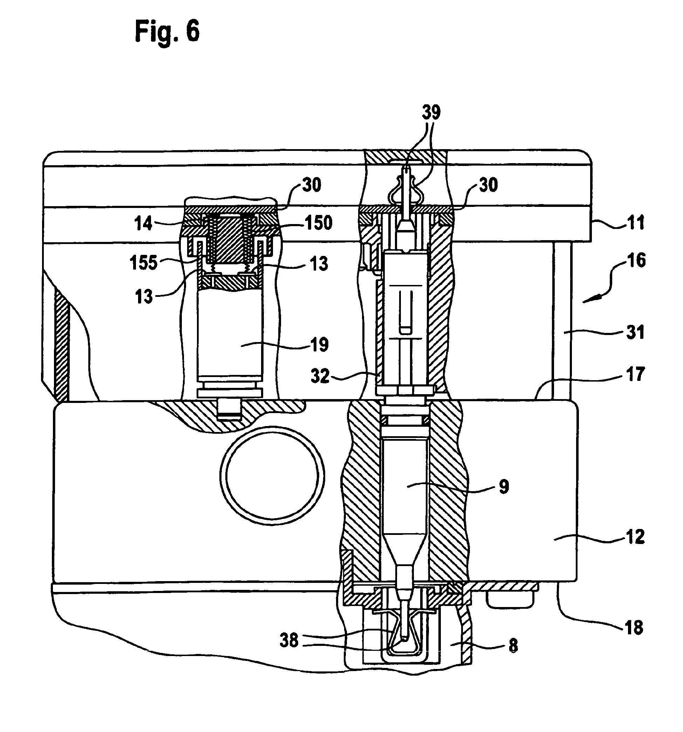

Bei der Fertigung des Steuergeräts werden der Drucksensor und der Pumpenmotor vor dem Zusammenstecken von Regler und Ventilblock auf dem Ventilblock 12 montiert. Es besteht nun bei der Fertigung in Bezug auf die zu berücksichtigenden allgemeinen Fertigungstoleranzen das Problem, daß die Position des Drucksensors, insbesondere die Lage der hierfür vorgesehenen Bohrung im Ventilblock, im wesentlichen vollständig bereits vor dem Steckvorgang von Regler und Ventilblock festgelegt ist. Berücksichtigt werden muß ferner, daß beim Steckvorgang gemäß der in Fig. 6 dargestellten Ausführungsform neben dem elektrischen Kontakt des Drucksensors auch der elektrische Kontakt des Pumpenmotors über einen stabförmigen, aus dem Ventilblock herausragenden, Motoradapter 9 hergestellt wird. Dabei ist es wichtig, daß beim Steckvorgang sämtliche männlichen Elemente der elektrischen Stecker mit dessen weiblichen Elementen exakt zusammenfallen. Dies ist jedoch aufgrund der vorhandenen Toleranzen für die Drucksensorkontakte 13 und die Motorkontakte nicht ohne weiteres zu erfüllen. Wenn nun beim Vorgang des Zusammenfügens von Reglergehäuse und Ventilblock zuerst der stabförmige Motorstecker in eine entsprechend rohrförmige Führung im Reglergehäuse eingreift, ist die relative Positionierung von Reglergehäuse und Ventilblock durch die Lage des Motorstekkers festgelegt. Durch diese Fixierung führend vorhandene Toleranzen zu einer nicht genau festgelegten Lage der Stekkerkontakte des Sensors.

Die weiter oben erwähnten Toleranzen, die bei der Montage jeweils des die Elektronik aufnehmenden Reglergehäuses und des hydraulischen Ventilblocks auftreten, können sich insbesondere während des Schrittes des Zusammenfügens von Ventilblock und Reglergehäuse lokal in ungünstiger Weise akkumulieren. Eine Kontaktierung eines auf dem hydraulischen Block angeordneten Aktuators oder Sensors mit der Leiterplatte im Reglergehäuse unter Beibehaltung der Steckmöglichkeit wird durch die auftretenden Toleranzen erschwert, bzw. verhindert.
In einer bevorzugten Ausführungsform der Erfindung wird dieses Problems gelöst durch einen Kontaktbereich zwischen Sensor und Leiterplatte, welcher die Möglichkeit zum Ausgleichen von Toleranzen durch verschiebbare Kontaktelemente, welche beispielsweise Federn oder in Ausnehmungen verschiebbare Buchsen sein können, bietet. Hierdurch können vorteilhafterweise die Toleranzgrenzen in vorhergehenden Fertigungsschritten weiter gefaßt werden. Die angegeben Kontaktbereiche ermöglichen einen Toleranzausgleich senkrecht zur Oberfläche 17 des Ventilblocks und parallel dazu. Außerdem ist bevorzugt ein Toleranzausgleich vorgesehen, der auch eine Verdrehung um die Längsachse des Drucksensors in bestimmtem Maße zuläßt.

In einer weiteren bevorzugten Ausführungsform wird zur Überwindung des Toleranzproblems der Drucksensor mit dem Motorkontaktierungselement baulich verbunden. Durch das Zusammen fassen der elektrischen Kontakte des bzw. der Drucksensor/en ergibt sich der Vorteil einer zuverlässigeren elektrischen Kontaktierung bei gleichzeitig vereinfachter Fertigung.

Zudem läßt sich die steckbare Gehäuseeinheit mit den elektronischen Bauelementen einfacher verpacken und transportieren. Diese Konstruktion ist unter anderem deshalb von Vorteil, da eine in an sich bekannten elektronischen Gehäuseeinheiten vorhandene Adapterführung 32 (siehe Figuren 2 und 6) entfallen kann.

Die erfindungsgemäße Integration des Drucksensors in das Bremsensteuergerät hat den Vorteil, daß von dem Gehäuse des elektronischen Reglers auch der Drucksensor mitumfaßt wird, wodurch dieser vor Umwelteinflüssen wesentlich besser geschützt ist, als ein außerhalb, z.B. am Tandemhauptzylinder, angeordneter Drucksensor. Ein weiterer Vorteil besteht darin, daß durch die Integration eines oder mehrere Drucksensoren im Steuergerät auf zusätzliche Kabelbäume verzichtet werden kann.

Es zeigen
- Fig. 1: einen Querschnitt durch einen Kontaktbereich zwischen Drucksensor und elektronischem Bauteilträger,
- Fig. 2: das Gehäuse eines elektronischen Reglers in Aufsicht,
- Fig. 3: einen einzelnen Drucksensor in Seitenansicht,
- Fig. 4: den Drucksensor nach Fig. 3 in Aufsicht,
- Fig. 5: einen einzelnen Drucksensor gemäß Fig. 3 nach dem Zusammenfügen von Reglergehäuse und Ventilblock,
- Fig. 6: eine Seitenansicht, teilweise im Querschnitt, durch ein Steuergerät mit einem Sensor nach Fig. 3 und einem Motoradapter,
- Fig. 7: einen Querschnitt durch ein Steuergerät mit einem mit einem Drucksensormodul zusammengeführten Motoradapter und einem gemeinsamen länglichen Stecker,
- Fig. 8: einen gemeinsamen länglichen Stecker des mit dem Drucksensormodul verbundenen Motoradapter von Fig. 7 in Aufsicht,
- Fig. 9: einen Querschnitt durch ein Steuergerät mit einem Drucksensormodul, der mit einem Motoradapter zusammengeführt ist, mit einem an einen länglichen Stecker für Drucksensorkontakte angefügten Adapterstecker,
- Fig. 10: den zusammengefügten Stecker von Fig. 9 mit Drucksensorkontakten und Motorkontakten in Aufsicht,
- Fig. 11: eine Kontaktflächenanordnung eines Drucksensors mit vier kreisförmigen Kontaktflächen,
- Fig. 12: Kontaktflächenanordnungen mit länglichen Kontaktflächen,
- Fig. 13: einen Querschnitt durch einen Drucksensor mit einem durch ein Abdichtmittel gegen äußere Umwelteinflüsse abgedichteten Kontaktbereich
- Fig. 14: eine perspektivische Darstellung des Kontaktbereichs nach Fig. 13 und
- Fig. 15: zwei Beispiele für abgestufte Kontaktelemente.

Wie im Beispiel in den Figuren 1 bis 6 dargestellt, ist der Drucksensor 19 mit dem Ventilblock 12 über eine Bohrung im Ventilblock, beispielsweise mittels einer Clinch-Verbindung mechanisch und hydraulisch angebunden. Auf einer dem Regler 11 zugewandten Seite des Drucksensors besitzt dieser einen an sich bekannten elektrischen Kontakt mit an sich bekannten Federelementen zur Bildung eines Kontakts nach dem Zusammenstecken des Ventilblocks mit dem Regler. Nach dem Zusammenfügen des Reglers und des Ventilblocks wird der Drucksensor durch das Reglergehäuse geführt und ist im Steuergerät somit vollständig integriert (Fig. 2, 5 und 6).

Bei der Fertigung des Steuergeräts werden der Drucksensor und der Pumpenmotor vor dem Zusammenstecken von Regler und Ventilblock auf dem Ventilblock 12 auf an sich bekannte Weise montiert. Nach der an sich bekannten Fertigungsmethode wird beim Steckvorgang neben einem Zusammenfügen der Spulen auch der elektrische Kontakt des Pumpenmotors über einen stabförmigen, aus dem Ventilblock herausragenden, Motoradapter 9 (Fig. 6) hergestellt. Insbesondere während einer automatischen Fertigung ist es wichtig, daß beim Steckvorgang sämtliche männlichen Elemente der elektrischen Stecker mit den weiblichen Elementen der Stecker exakt zusammenfallen. Wie bereits geschildert, ist dies ist aufgrund der vorhandenen Toleranzen für die Drucksensorkontakte 13 und die Motorkontakte nicht ohne weitere Maßnahmen gleichzeitig zu erfüllen. Wenn beim Zusammenfügen von Reglergehäuse und Ventilblock zunächst der stabförmige Motorstecker in eine entsprechend rohrförmige Führung im Reglergehäuse eingreift, wird die relative Positionierung von Reglergehäuse und Ventilblock durch die Lage des Motorsteckers festgelegt. Zum Ausgleich der Toleranzen ist ein verschiebbarer Kontaktbereich mit verschiebbaren Sensorkontakten 13 und einer verschiebbaren Abdichtung vorgesehen.

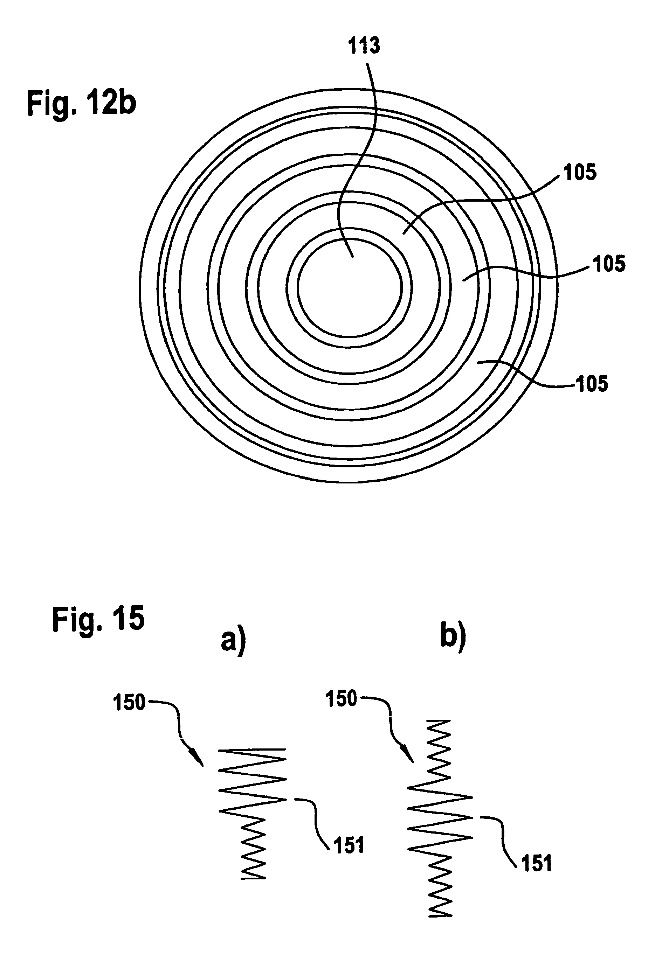

In Fig. 1 ist der elektrische Kontakt des Drucksensors 19 (Fig. 6) mit der Leiterplatte 30 dargestellt. Auf der Leiterplatte, die im Kunststoffgehäuse 15 des elektronischen Reglers 11 befestigt ist, sind Kontaktflächen 152 angeordnet, die einen elektrischen Kontakt zu nicht gezeichneten Federelementen in den Ausnehmungen 14 herstellen. Bei den Ausnehmungen handelt es sich um Bohrungen im Kunststoffgehäuses des Reglers, die eine Abstufung aufweisen, so daß die abgestuften Federelemente von Fig. 15 vor der Endmontage in die Bohrungen eingelegt werden können.
Vorzugsweise werden einstufige Federelemente gemäß Figur 15a) verwendet, die insbesondere so orientiert sind, daß das schlanke Ende der Feder in Richtung des Sensors oder Aktuators weist.

Im Gehäuse des Reglers sind nach der Erfindung Abdichtmittel 153 aus einem Doppelkragen 154, der mit einem Dichtmaterial gefüllt ist, vorgesehen.
Der Doppelkragen besteht aus zwei Wandungen mit einer umlaufenden grabenförmigen Vertiefung, wobei vorzugsweise die innere Wandung, welche zweckmäßigerweise auch die Federn aufnimmt, gegenüber der äußeren Wandung erhöht ist, wodurch sich vorteilhafterweise ein Schutz der Kontaktelemente von bei der Montage eindringendem Abdichtmittel ergibt. Bei dem Abdichtmaterial handelt es sich insbesondere um Silikonkautschuk, z.B. Silgel(R) der Fa. Wacker Chemie, welches in den Doppelkragen eingespritzt werden kann. Nach dem Einspritzen des Abdichtmaterials taucht dann bei der Montage des Drucksensors ein Gehäusekragen 155 des Drucksensors in das Gel ein, so daß sich eine zuverlässige Abdichtung ergibt. Neben dem zuvor beschriebenen Gel kann als Abdichtmaterial auch ein abbindender oder thermoplastischer Klebstoff geeignet sein, bevorzugt handelt es sich jedoch um ein Elastomer, wie z.B. Silikon oder SilGe1(R).
Der vorstehend beschriebene Doppelkragen ist in der Lage, die besagten Toleranzen parallel zur Oberfläche 17, senkrecht dazu und die rotatorischen Toleranzen um die Längsachse des Drucksensors auszugleichen.

Das Gehäuse des elektronischen Reglers 11 im unmontierten Zustand ist in Fig. 2 in Aufsicht dargestellt. Das Gehäuse besteht vorzugsweise aus Kunststoff, kann aber auch ganz oder teilweise aus einem metallischen Material bestehen, wenn eine höhere Wärmeabgabe an die Umgebung notwendig ist. Das Gehäuse weist des weiteren angeformte Spulenaufnahmen 34, eine angeformte Drucksensoraufnahme 35 und einen elektrischen Stecker 36 für die Anschlüsse des Reglers auf.

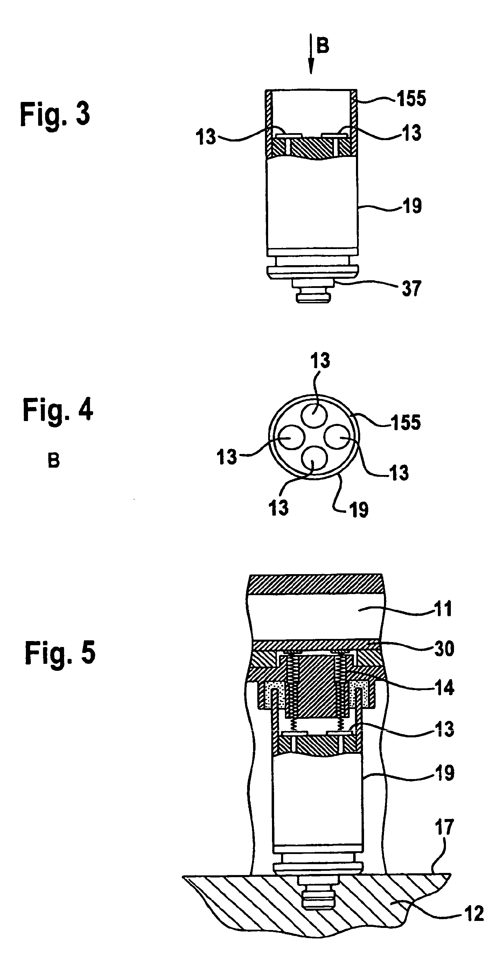

In Fig. 3 ist der Drucksensor 19 in Seitenansicht dargestellt. Das untere Ende des Drucksensors ist mit einem hydraulischen Drucksensoranschluß an den Ventilblock 12 (Fig. 6) druckdicht verbindbar. Am oberen Ende des Drucksensors befinden sich scheibenförmige leitfähige Kontaktflächen 13, die bei der Montage von Regler und Ventilblock gegen die Federkontakte auf der Leiterplatte gedrückt werden. Durch Kontakt der Federn mit den Kontaktflächen ergibt sich ein elektrischer Anschluß des Drucksensors an die Leiterplatte, welcher zum Ausgleich der weiter oben erwähnten Montagetoleranzen geeignet ist.

Fig. 4 zeigt das obere Ende des Drucksensors aus Fig. 3. Auf einer kreisförmigen Oberfläche des Sensors sind vier kreisförmige Kontaktflächen 13 angeordnet.

In Fig. 5 ist der Drucksensor aus Fig. 3 und 4 nach der Montage von elektronischem Regler 11 und Ventilblock 12 gezeigt. Nach dem Zusammenfügen von Regler und Ventilblock stehen die Federelemente 150 (Fig. 15) mit den Kontaktflächen 13 in Kontakt.

Fig. 6 zeigt ein zusammengebautes Steuergerät 16 in Seitenansicht. Der Pumpenmotor 8 ist an eine Oberfläche 18 des Ventilblocks 12 angeschraubt. Zum Heranführen der elektrischen Anschlüsse des Motors an die Leiterplatte 30 ist ein Motoradapter 9 vorgesehen, welcher durch eine Bohrung des Ventilblocks ragt und in einer am Gehäuse 31 befestigten Führung zur Leiterplatte 30 ragt. Der im Motoradapter vorgesehene elektrische Leiter ist mit dem Motor über ein Kontaktelement 38 und mit der Leiterplatte über ein weiteres Kontaktelement 39 verbunden.

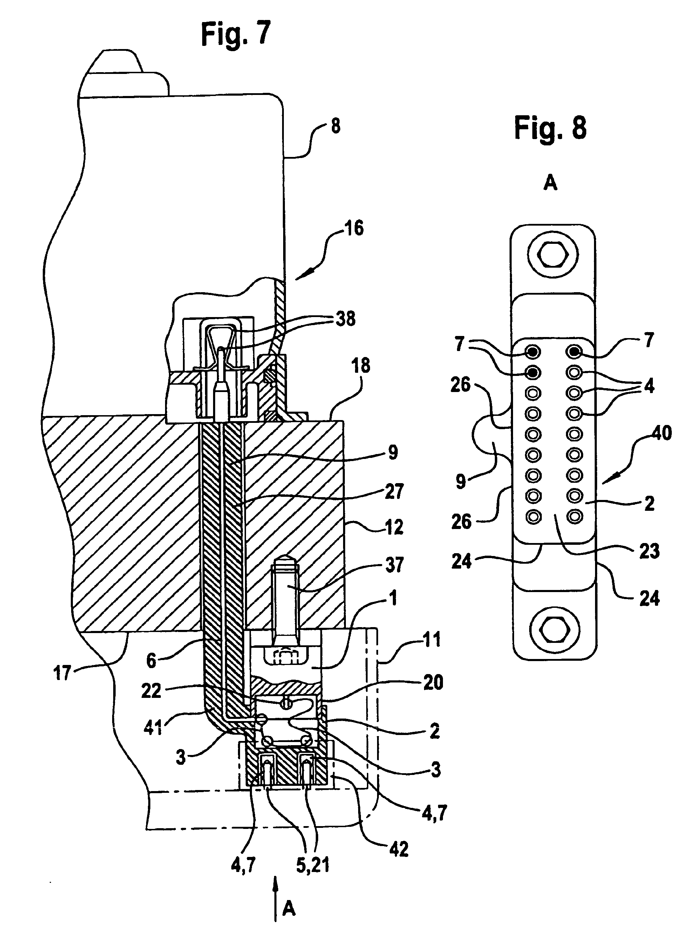

In Fig. 7 ist eine Teilansicht eines Steuergeräts mit Kombination eines Drucksensorkontaktbereichs und Motoradapter dargestellt. Im Gegensatz zu Fig. 6 ist die Figur bezüglich der Lage von Motor und Regler um 180° gedreht. Motor 8 ist wie in Fig. 6 an Oberfläche 18 des Ventilblocks 12 angefügt. Im Motoradapter 9, der ebenfalls durch den Ventilblock geführt ist, verläuft die elektrische Motorzuleitung 6. Die Motorzuleitung 6 ist gegenüber dem Ventilblock mit einem mechanisch stabilen Isolationsmaterial 27, welches bevorzugt ein Kunststoffmaterial ist, isoliert. Im in Fig. 7 dargestellten Beispiel sind zur Messung des Hydraulikdrucks an der Leitung zum Bremspedal und/oder des Drucks in den Leitungen zu den Bremsen mehrere Drucksensoren, zu einem Modul im Drucksensormodulgehäuse 1 zusammengefaßt. Die hydraulische Anbindung der Drucksensoren an den Ventilblock erfolgt über hydraulische Drucksensoranschlüsse 37 an Fläche 17 des Ventilblocks. Die dem Regler zugewandte Seite des Modulgehäuses 1 besitzt eine hochgezogene Modulgehäusewandung 20, über die ein geeignet geformtes Deckelelement des Buchsengehäuses 2, das mit dem Motoradapter 9 formschlüssig verbunden ist, greift, wodurch eine Aussparung gebildet wird. Das Buchsengehäuse ist mit dem Sensormodul kraftschlüssig, z.B. durch Verrastung oder Verschraubung etc., verbunden. Die elektrischen Kontakte der Drucksensoren führen in die von der Wandung 20 und dem Buchsengehäuse 2 gebildete Aussparung. In dieser Aussparung werden die Sensorelementkontakte 22 mit Kontaktbuchsen 4 über ein flexiblen Leiter 3 (Drähte oder bevorzugt eine mit Leiterbahnen beschichtete flexible Folie) verbunden, die in dem Kunststoffbuchsengehäuse 2 angeordnet sind. Die flexible Folie ist mit Leiterbahnen zur Herstellung der entsprechenden elektrischen Verbindungen beschichtet. Das Kunststoffbuchsengehäuse 2 ist an einen länglichen Sensorkontaktstecker 40 (Fig. 8) rückseitig angeformt. An der Seite des Gehäuses 2 ist über eine Biegung 41 die Isolation des Motoradapters 9 an die Seitenfläche 26 (Fig. 8) des Gehäuses 2 angeformt. Die Zuleitung 6 des Motors wird hierdurch in das Gehäuse 2 geführt, wodurch über den flexiblen Leiter 3 und entsprechende Motorkontaktbuchsen 7 ein gemeinsames Stecken der elektrischen Verbindung des Motors mit der elektrischen Verbindung der Drucksensoren ermöglicht wird.

Fig. 8 zeigt den Sensorkontaktstecker 40 in Aufsicht. Die Sensorkontaktbuchsen 4 und die Motorkontaktbuchsen 7 sind gemeinsam in einem Raster 23 zweireihig angeordnet. Der Stecker 40 wird beim Zusammenfügen von Regler und Ventilblock in eine weibliche Aufnahme 42 des Reglergehäuses geführt, in die die Kontaktstifte 5 (Sensor) und 21 (Motor) kraftschlüssig und leitend, z.B. mittels an sich bekannter Einpreßtechnik, montiert sind (Fig. 7).

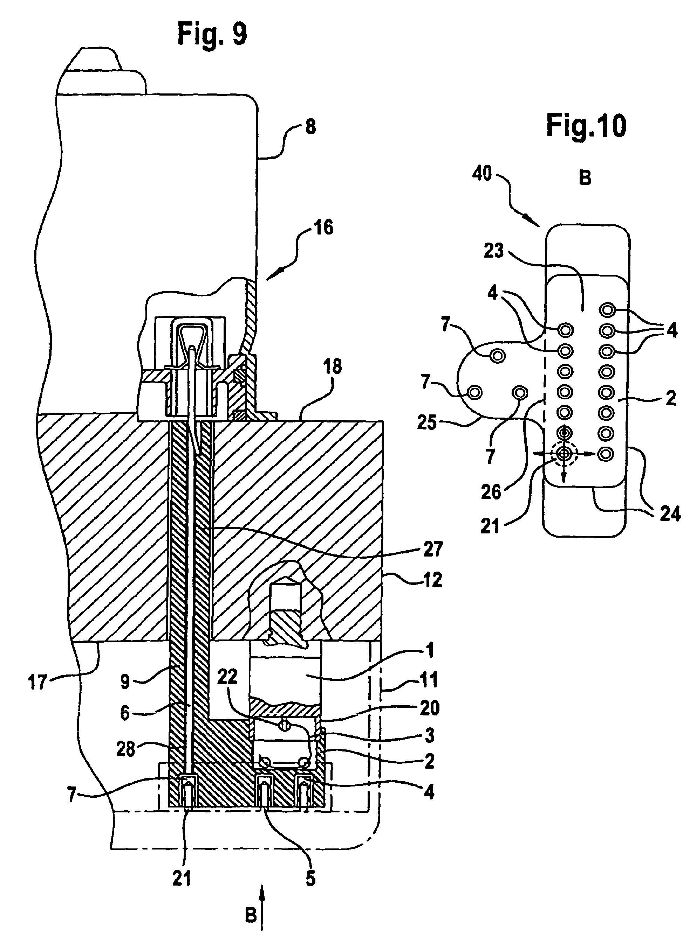

In Fig. 9 ist ein weiteres Beispiel für einen mit einem Drucksensormodul 1 verbundenen Motoradapter 9 dargestellt. Fig. 10 zeigt den zugehörigen Sensorkontaktstecker 40'. Im Gegensatz zu der Ausführungsform in den Figuren 7 und 8 sind die Motorkontaktbuchsen 7 nicht im zweireihigen Raster 23, welcher hier ausschließlich Sensorkontaktbuchsen 4 umfaßt, angeordnet. Die Motorkontaktbuchsen 7 sind vielmehr in einem kreisförmigen Bereich 25 geführt, der an einer Längsseite 26 des Kunststoffbuchsengehäuses 2 angeformt ist.
Der flexible Leiter 3 verbindet in diesem Beispiel ausschließlich die Sensorelementkontakte mit den Sensorkontaktbuchsen 4. Die Motorzuleitung 6 ist direkt fest mit den Motorkontaktbuchsen 7 verbunden.

In der an sich bekannten Ausführungsform nach den Figuren 1 bis 6 wird, wie weiter oben bereits erläutert, der Toleranzausgleich durch die Anordnung mit Federelementen und Kontaktflächen herbeigeführt. Auch in den Ausführungsformen der Figuren 7 bis 10 ist ein Toleranzausgleich vorgesehen.
Hierzu ist in der Isolation 27 des Motoradapters 9 in Fig. 9 der Leiter 6 als ein starrer metallischer Stab, wobei dieser z.B. ein Stahldraht oder ein flaches Metallband sein kann, ausgeführt, welcher in einer Ausnehmung des Adapters mit Übermaß geführt wird. Auch die mit dem Leiter 6 formschlüssig verbundene Kontaktbuchse 7 ist in einer Ausnehmung mit Übermaß im Kunststoffbuchsengehäuse geführt. Hierdurch ist eine gewisse Bewegungsfreiheit in einem Bereich 21 in der Ebene parallel zur Oberfläche 17 im Stecker 40' gegeben, durch die ein Toleranzausgleich möglich wird.
Die Kontaktbuchsen der Sensorelemente 4 können im Kunststoffbuchsengehäuse ebenfalls mit einem Spiel versehen sein. Durch die Kontaktierung über einen flexiblen Leiter 3 sind die Buchsen des Sensors dann ebenfalls in einem vorgegebenen Bereich frei beweglich.

Ein weiteres Beispiel für eine Ausführungsform, welche nicht in den Figuren dargestellt ist, ist ein Drucksensormodul in dem mehrere einzelne Drucksensoren gemäß Fig. 3 in einem gemeinsamen Gehäuse, insbesondere in einer Matrix, zusammengefaßt sind. Im Gegensatz zu dem in Fig. 7 dargestellten Beispiel ist das Gehäuse des Moduls 1 nicht mit dem Motoradapter 9 verbunden, sondern ähnlich der Anordnung mit einem Einzelsensor gemäß Fig. 6 an anderer Position auf der Ventilblockoberfläche 17 angeordnet. In einem derartigen Drucksensormodul sind vorzugsweise die Drucksensoranschlüsse 37 als separate Austritte aus dem gemeinsamen Modulgehäuse ausgebildet und die elektrischen Anschlüsse in einem mehrpoligen Kontaktbereich mit Toleranzausgleich geführt.

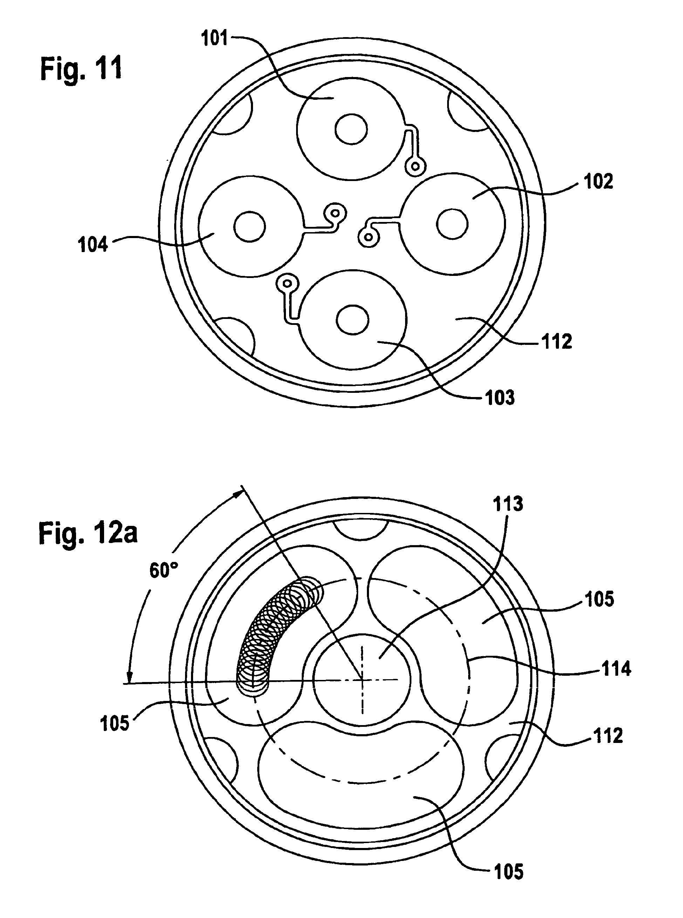

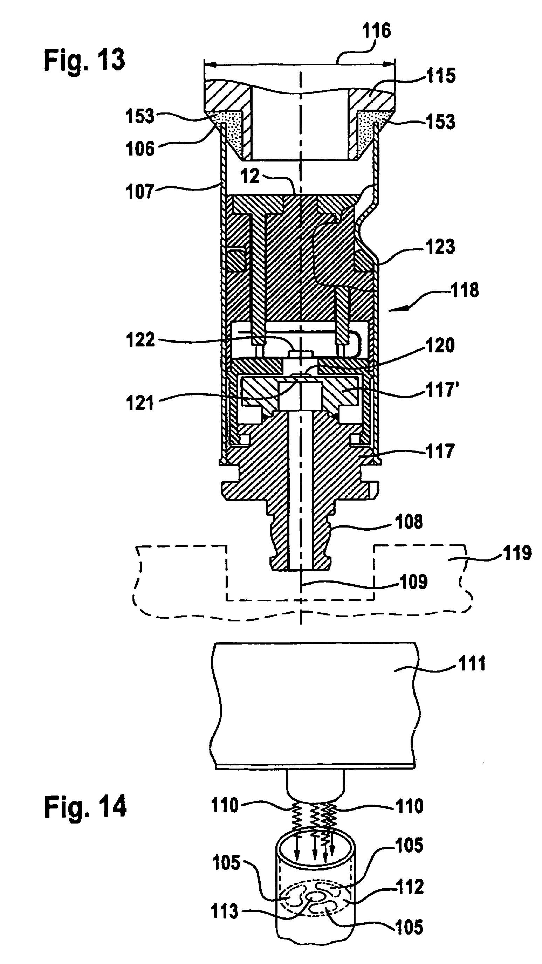

In Fig. 11 ist ein einzelner Drucksensor dargestellt. Diese besitzt vier flächenförmige, insbesondere kreisförmige Kontaktflächen, von denen zwei für die Druck-/Temperaturinformation 101,102 und die weiteren zum Anschluß einer Versorgungsspannung 103 und der Masse 104 herangezogen werden können. Die Kontaktflächen werden nach der Figur mittels elektrisch leitender Federelemente 110 mit dem Bauteilträger 111 (Fig.14) in der elektronischen Regeleinheit elektrisch verbunden. Die Flächen können metallisiert sein oder selbst aus einem gut leitfähigen Material bestehen, insbesondere Gold oder Silber. In Fig. 11 sind die Flächen auf dem Umfang eines Kreises angeordnet und etwa von gleichem Durchmesser, wobei der Durchmesser der Kontaktflächen größer gewählt ist, als der Durchmesser der Kontaktelemente.
Bei der Konstruktion des Kontaktbereichs muß ein bestimmter, durch das Gesamtsystem vorgegebener Toleranzbereich für den Drucksensor eingehalten werden. Gleichzeitig soll der Bauraumverbrauch des Kontaktbereichs möglichst gering sein, da genügend Platz für die übrigen Bauelemente, wie Ventilspulen, Motorkontakt etc., auf der zur Verfügung stehenden Gesamtfläche verbleiben muß. Die nachfolgenden Beispiele beschreiben eine in dem geschilderten Sinne vorteilhafte Ausführungsform.

Gemäß den Figuren 12a und 12b werden die auf dem Kreisumfang angeordneten Kontaktflächen in einer koaxialen Anordnung auf der zu Verfügung stehende Kreisfläche 112 angeordnet.
Nach Fig. 12a sind die Kontaktflächen 105 bis auf den Mittenkontakt 113 länglich gekrümmt bzw. nierenförmig tangential entlang eines Kreisumfangs 114 angeordnet.
In Fig. 12b sind die Kontaktflächen voneinander isolierte konzentrische Flächenringe.
Zum Ausgleich der Toleranzen ist die in Fig. 12a dargestellte Anordnung besonders vorteilhaft, da neben translatorischen auch rotatorische Toleranzen ausgeglichen werden können. Die bereits mehrfach erwähnten translatorischen Toleranzen können von Ungenauigkeiten bei der Positionierung der Bohrungen für die Anschlüsse des Sensors oder Aktuators in der hydraulischen Einheit 119 und im elektronischen Bauteilträger entstehen, aber auch beispielsweise durch geringfügige Höhenunterschiede beim Einbau der Leiterplatte in das Gehäuse. Die rotatorischen Toleranzen werden bei der automatischen Fertigung im wesentlichen dadurch verursacht, daß bei der Befestigung z.B. eines Sensors in der hydraulischen Einheit mittels einer Clinch-Verbindung bezüglich der Achse 109 (Fig. 13) Winkeltoleranzen auftreten können.

Wie vorstehend erwähnt, kann der Drucksensor mittels einer Clinch-Verbindung mit der hydraulischen Einheit verbunden sein. Der Begriff "Clinch" (auch Clinchen) ist der Sammelbegriff für eine Reihe von umformtechnischen Fügeverfahren, die ohne jegliche Hilfsfügeteile auskommen. Eine Clinch-Verbindung erhält man durch formschlüssiges Verbinden von mindestens zwei Fügeteilen, die einander durchsetzen. Dies geschieht beispielsweise in Verbindung mit Einschneiden oder -pressen, anschließendem Kaltstauchen, letztlich gefolgt von Breiten oder Fließpressen. Diese Verbindungsmethode läßt sich besonders zweckmäßig bei Rohr- und Profilteilen anwenden.

Fig. 13 zeigt einen Querschnitt durch einen Drucksensor mit einem durch ein Abdichtmittel 153 gegen äußere Umwelteinflüsse abgedichteten Kontaktbereich. Zur Abdichtung wird eine Ausnehmung im Gehäuse 115 mit dem weiter oben beschriebenen Abdichtmaterial gefüllt. Danach drückt sich bei der Montage des Drucksensors ein geeignet geformter Gehäuserand 107 in das Abdichtmaterial. Der Bereich der konusförmigen Ausnehmung hat vorzugsweise im Querschnitt betrachtet die Form eines rechtwinkligen Dreiecks, so daß die Hypotenuse des Dreiecks eine sogenannte Dichtschräge bildet. Durch geeignete Wahl der Größe der Dreiecksfläche kann der benötigte Toleranzbereich an den Toleranzbereich der Kontaktflächen angepaßt werden. Durch die dargestellte Dichtung, die ähnlich einem Konus geformt ist, läßt sich vorteilhafterweise der im Reglergehäuse benötigte Bauraum im wesentlichen auf den Durchmesser 116 des Sensors begrenzen.

Fig. 13 enthält auch eine detaillierte Darstellung eines einsetzbaren Drucksensors. Auf einem Membranträger 117' ist zur mechanischen Anbindung an das Druckmedium eine Membran 121 angeordnet. Der Membranträger dient gleichzeitig auch als Anbindung (z.B. durch Clinch) an die hydraulische Einheit. Dieser kann zweistückig ausgeführt sein 117, 117', ist aber vorzugsweise zum Zwecke einer kostengünstigern Fertigung einstückig konstruiert. Auf der Membran befindet sich ferner eine Meßbrücke 120, deren Signale mittels einer Elektronik 122 weiterverarbeitet werden.

Fig. 14 zeigt in schematischer Darstellung das Zusammenfügen eines Reglergehäuses 111 mit einer hydraulischen Einheit und den dabei entstehenden elektrischen Kontakt des Drucksensors mit dem elektrischen Bauteilträger.

In Fig. 15 sind Beispiele für elastische Kontaktelemente dargestellt. Teilbild a) zeigt eine im Durchmessers einfach abgestufte Feder 150. Die Feder in Teilbild b) ist im Durchmesser mehrfach abgestuft. Durch den Bereich mit größerem Durchmesser 151 kann die Feder in eine abgestufte Bohrung im Gehäuse des elektronischen Reglergehäuses 15 (Fig. 1) vor der Endmontage eingelegt werden, ohne daß diese hindurchfällt.

## Patentansprüche

1. Vorrichtung zum Bremsen umfassend ein zusammengesetztes Steuergerät (16), bei dem eine erste steckbare Gehäuseeinheit (11), welche im wesentlichen die elektronischen Bauelemente auf einem oder mehreren Bauteilträgern (30) beinhaltet, mit einem blockförmigen Massivteil (12) an einer ersten Oberfläche (17) des Massivteils zur Herstellung einer magnetischen und elektrischen Verbindung zusammengesteckt ist, wobei das Massivteil magnetisch betätigte Hydraulikventile zur Ansteuerung der Bremsen und Hydraulikleitungen aufweist und wobei die Vorrichtung mindestens einen Drucksensor zur Messung des Drucks in den Hydraulikleitungen an geeigneten Meßpunkten umfaßt, wobei der oder die Drucksensoren in dem zusammengesetzten Steuergerät integriert sind, **dadurch gekennzeichnet, daß** zur Abdichtung des oder der Drucksensor/-s/-en gegenüber der ersten Gehäuseeinheit und/oder des Bauteilträgers ein Abdichtmittel (153) vorgesehen ist, welches einen mit einem Abdichtmaterial (153) gefüllten Doppelkragen (154) aufweist, in den ein Drucksensorkragen unter Beibehaltung eines Toleranzbereichs einführbar ist.

2. Vorrichtung nach Anspruch 1, **dadurch gekennzeichnet, daß** der elektrische Kontaktbereich des oder der Drucksensor/-s/-en parallel zur Oberfläche (17) verschiebbare und/oder senkrecht dazu verschiebbare und/oder in der Drucksensorlängsachse verdrehbare Kontaktelemente (150,151,152,4,21) aufweist, so daß bei einer toleranzbedingten Verschiebungen der Position des Kontaktbereichs der Leiterplatte relativ zur Position des Kontaktbereichs des oder der Drucksensor/-s/-en ein sicherer elektrischer Kontakt erhalten wird.

3. Vorrichtung nach Anspruch 2, **dadurch gekennzeichnet, daß** eine leitfähige Verbindung des Bauteilträgers mit dem oder den Drucksensor/-en durch mindestens ein elektrisch leitendes stauchbares und elastisches Kontaktelement hergestellt wird, wobei das Kontaktelement (150) mindestens ein radiales Auflagemittel (151), insbesondere einen stufenförmigen Vorsprung, aufweist und an der ersten Gehäuseeinheit oder einem mit diesem Gehäuse verbundenen Teil mindestens eine geeignet geformten Auflagefläche zur räumlichen Fixierung des Kontaktelements während der Fertigung der Vorrichtung vorgesehen ist.

4. Vorrichtung nach mindestens einem der Ansprüche 1 bis 3, **dadurch gekennzeichnet, daß** der Bauteilträger (30) zum kraftschlüssigen elektrischen Kontakt mit einem Kontaktelement (150) eine Kontaktfläche (152) aufweist, die eine größere flächige Ausdehnung besitzt als das Kontaktelement.

5. Vorrichtung nach mindestens einem der Ansprüche 1 bis 4, **dadurch gekennzeichnet, daß** der oder die Drucksensor/en auf einer ersten stirnseitigen Fläche (112) des oder der Sensor/-s/-en eine Kontaktflächenanordnung mit voneinander isolierten Kontaktflächen aufweist, durch die eine elektrische Verbindung am oder an den Sensor/en mit elastischen Kontaktelementen gebildet werden kann.

6. Vorrichtung nach Anspruch 5, **dadurch gekennzeichnet, daß** auf der ersten stirnseitigen Fläche (112) des oder der Drucksensor/-s/-en ein Zentralkontakt (113) im Bereich des Mittelpunkts der stirnseitigen Fläche (112) angeordnet ist und bei der mindestens zwei länglich ausgedehnte Umfangskontakte (105) vorhanden sind, die entlang Kreissegmenten eines Kreises (114) oder entlang mehrere konzentrischer Kreise um einen Mittelpunkt herum angeordnet sind.

7. Vorrichtung nach mindestens einem der Ansprüche 3 bis 6, **dadurch gekennzeichnet, daß** das Kontaktelement eine zylindrige Spiralfeder (150) ist, die einfach oder mehrfach bezüglich des Durchmessers abgestuft ist.

8. Vorrichtung nach einem der vorherigen Ansprüche, **dadurch gekennzeichnet, daß** mehrere Drucksensoren zu einem baulich kompakten Modul (1) zusammengefaßt sind.

9. Vorrichtung nach einem der vorherigen Ansprüche, **dadurch gekennzeichnet, daß** der oder die Drucksensor/-en auf der ersten Oberfläche (17) des Massivteils angefügt ist.

10. Vorrichtung nach Anspruch 9, **dadurch gekennzeichnet, daß**, die Anfügung eine Clinch-Verbindung ist.

11. Vorrichtung nach mindestens einem der Ansprüche 1 bis 10, **dadurch gekennzeichnet, daß** auf einer zweiten Oberfläche (18) des Massivteils, welche gegenüber der ersten Oberfläche angeordnet ist, ein Pumpenmotor (8) angefügt ist und daß von der ersten Gehäuseeinheit (11) durch das Massivteil (12) zum Pumpenmotor ein elektrisches Motorkontaktierungselement (9) geführt ist.

12. Vorrichtung nach Anspruch 8 und 11, **dadurch gekennzeichnet, daß** das Motorkontaktierungselement (9) fest oder steckbar mit dem Gehäuse (1) des Drucksensormoduls verbunden ist.

13. Vorrichtung nach Anspruch 12, **dadurch gekennzeichnet, daß** die elektrischen Anschlüsse des Motorkontaktierungselements (9) und die elektrischen Anschlüsse des Drucksensormoduls mit dem oder den Bauteilträgern über Kontaktelemente (7,21,4,5) erfolgt, die in einem gemeinsamen Bereich (24) geführt sind.

14. Vorrichtung nach Anspruch 13, **dadurch gekennzeichnet, daß** die Kontaktelemente steckbare Verbindungen aus Kontakt-Stiften und -Buchsen (4,5,7,21) sind, wobei die Stifte und/oder Buchsen mit dem Gehäuse (2) des Motorkontaktierungselements (9) verbunden sind und wobei die steckbaren Verbindungen in einem vorgegebenen Flächenbereich (21) parallel zur Ebene der ersten Oberfläche (17) verschiebbar sind.

15. Vorrichtung nach Anspruch 13 oder 14, **dadurch gekennzeichnet, daß** die Kontaktelemente (4,5) parallel zur Ebene der ersten Oberfläche in einem Raster (23) angeordnet sind.

16. Vorrichtung nach mindestens einem der Ansprüche 13 bis 15, **dadurch gekennzeichnet, daß** die Kontaktelemente des Sensormoduls in der Ebene der ersten Oberfläche in einem rechteckförmigen Bereich (24) und die Kontaktelemente des Pumpenmotors in einem außerhalb des rechteckförmigen Bereichs liegenden zweiten, insbesondere kreisförmigen Bereich (25) angeordnet sind, wobei der zweite Bereich an einer Längsseite (26) des rechteckförmigen Bereichs angefügt ist.

17. Vorrichtung nach mindestens einem der Ansprüche 11 bis 16, **dadurch gekennzeichnet, daß** das Motorkontaktierungselement einen oder mehrere elektrische Leiter (6) und eine Isolation (27) umfaßt, wobei der elektrische Leiter innerhalb der Isolation durch eine Ausnehmung (28) in der Isolation mit einem Spiel geführt wird und der elektrische Leiter insbesondere ein Starrdraht oder Flachband ist.

18. Vorrichtung nach einem der Ansprüche 11 bis 17, **dadurch gekennzeichnet, daß** der oder die elektrischen Leiter (6) im Motorkontaktierungselement über flexible Leitungen oder eine mit Leiterbahnen versehene flexible Folie (3) mit den Motorkontakt-Stiften oder -Buchsen (7,21) elektrisch leitend verbunden sind.

## Claims

1. Braking device comprising an assembled control mechanism (16) wherein a first plug-in housing unit (11) essentially containing the electronic components on one or more component carriers (30), is plugged together with a block-shaped solid part (12) at a first surface (17) of the solid part for establishing a magnetic and electrical connection, with said solid part including magnetically operated hydraulic valves for the actuation of the brakes and hydraulic lines, and with said device comprising at least one pressure sensor for measuring the pressure in the hydraulic lines at appropriate measuring points, with the pressure sensor or pressure sensors being integrated in the assembled control mechanism,
**characterized in that** for sealing the pressure sensor(s) relative to the first housing unit and/or the component carrier, a sealant (153) is provided including a double collar (154) filled with a sealing material (153), with a pressure sensor collar being insertable into said double collar, while a tolerance zone is maintained.

2. Device as claimed in claim 1,
**characterized in that** the electrical contact zone of the pressure sensor(s) includes contact elements (150, 151, 152, 4, 21) that are displaceable in parallel to the surface (17), and/or displaceable perpendicular thereto, and/or rotatable in the longitudinal axis of the pressure sensor so that a safe electrical contact is achieved in the event of a tolerance-induced displacement of the position of the contact zone of the printed circuit board in relation to the position of the contact zone of the pressure sensor(s).

3. Device as claimed in claim 2,
**characterized in that** a conductive connection between the component carrier and the pressure sensor(s) is constituted by at least one electrically conductive, compressible and elastic contact element, said contact element (150) including at least one radial supporting means (151), in particular a step-like projection, and at least one appropriately shaped supporting surface is provided on the first housing unit or a part connected to this housing for the spatial fixation of the contact element during manufacture of the device.

4. Device as claimed in at least one of claims 1 to 3,
**characterized in that** for constituting an electrical contact by operative engagement with a contact element (150), the component carrier (30) includes a contact surface (152) having a larger planar extension than said contact element.

5. Device as claimed in at least one of claims 1 to 4,
**characterized in that** on a first frontal surface (112) of the sensor(s), the pressure sensor includes or the pressure sensors include an arrangement of contact surfaces being isolated from each other and allowing an electrical connection at the sensor(s) to be constituted with elastic contact elements.

6. Device as claimed in claim 5,
**characterized in that** on the first frontal surface (112) of the pressure sensor(s), a central contact (113) is arranged in the area of the center of the frontal surface (112), and wherein there is provision of at least two oblong peripheral contacts (105) which are arranged along circular segments of a circle (114) or along several concentric circles around a center.

7. Device as claimed in at least one of claims 3 to 6,
**characterized in that** the contact element is a cylindrical spiral spring (150) which is stepped one time or several times with respect to the diameter.

8. Device as claimed in any one of the preceding claims,
**characterized in that** several pressure sensors are grouped in a structurally compact module (1).

9. Device as claimed in any one of the preceding claims,
**characterized in that** the pressure sensor(s) is/are attached to the first surface (17) of the solid part.

10. Device as claimed in claim 9,
**characterized in that** the joining method is a clinched engagement.

11. Braking device as claimed in at least one of claims 1 to 10,
**characterized in that** a pump motor (8) is attached to a second surface (18) of the solid part which is arranged opposite the first surface, and **in that** an electric motor contacting element (9) extends from the first housing unit (11) through the solid part (12) to the pump motor.

12. Device as claimed in claims 8 and 11,
**characterized in that** the motor contacting element (9) is connected to the housing (1) of the pressure sensor module in a fixed or plug-type fashion.

13. Device as claimed in claim 12,
**characterized in that** the electrical connections of the motor contacting element (9) and the electrical connections of the pressure sensor module to the component carrier(s) occur by way of contact elements (7, 21, 4, 5) guided in a joint area (24).

14. Device as claimed in claim 13,
**characterized in that** the contact elements are plug-in connections made up of contact pins and bushes (4, 5, 7, 21), with said pins and/or bushes being connected to the housing (2) of the motor contacting element (9), and with the plug-in connections being displaceable in a predetermined surface area (21) in parallel to the plane of the first surface (17).

15. Device as claimed in claim 13 or 14,
**characterized in that** the contact elements (4, 5) are arranged in parallel to the plane of the first surface in a screen (23).

16. Device as claimed in at least one of claims 13 to 15,
**characterized in that** the contact elements of the sensor module are arranged in the plane of the first surface in a rectangular area (24), and the contact elements of the pump motor are arranged in a second, especially circular area (25), lying outside the rectangular area, said second area being joined at a side wall (26) of the rectangular area.

17. Device as claimed in at least one of claims 11 to 16,
**characterized in that** the motor contacting element comprises one or more electric conductors (6) and an insulation (27), with the electric conductor being guided with play within the insulation through a recess (28) in the insulation, and the electric conductor being especially a stiff wire or flat strip.

18. Device as claimed in any one of claims 11 to 17,
**characterized in that** the electric conductor(s) (6) in the motor contacting element is/are connected in an electrically conductive fashion to the motor contact pins or bushes (7, 21) by way of flexible lines or a flexible foil (3) provided with conductor tracks.

## Revendications

1. Dispositif de freinage comprenant un appareil de commande (16) assemblé dans lequel une première unité de boîtier (11) enfichable, qui contient essentiellement les composants électroniques sur un ou plusieurs supports de composants (30), est assemblée par enfichage avec un élément massif (12) en forme de bloc sur une première surface (17) de l'élément massif, pour réaliser une liaison magnétique et électrique, l'élément massif comportant des soupapes hydrauliques actionnées magnétiquement pour la commande des freins ainsi que des conduites hydrauliques et le dispositif comprenant au moins un capteur de pression pour mesurer la pression dans les conduites hydrauliques, en des points de mesure appropriés, le ou les capteurs de pression étant intégrés à l'appareil de commande assemblé, **caractérisé en ce que** pour rendre étanche le ou les capteurs de pression par rapport à la première unité de boîtier et/ou le support de composants, il est prévu un moyen d'étanchéité (153) qui comporte une double collerette (154) remplie d'un matériau d'étanchéité (153), dans laquelle on peut introduire une collerette de capteur de pression en conservant une plage de tolérances.

2. Dispositif selon la revendication 1,**caractérisé en ce que** la zone de contact électrique du ou des capteurs de pression comporte des éléments de contact (150, 151, 152, 4, 21) coulissant parallèlement à la surface (17) et/ou coulissant perpendiculairement à celle-ci et/ou tournant dans l'axe longitudinal du capteur de pression, de sorte que dans le cas de déplacements, dus aux tolérances, de la position de la zone de contact de la plaquette à circuits imprimés par rapport à la position de la zone de contact du ou des capteurs, un contact électrique sûr est obtenu.

3. Dispositif selon la revendication 2, **caractérisé en ce qu'**une liaison conductrice du support de composants avec le ou les capteurs de pression est réalisée par au moins un élément de contact électriquement conducteur, compressible et élastique, l'élément de contact (150) comportant au moins un moyen d'appui radial (151), en particulier une saillie en forme de gradin, et, sur la première unité de boîtier ou sur une pièce reliée à ce boîtier, étant prévue au moins une surface d'appui de forme appropriée pour la fixation dans l'espace de l'élément de contact pendant la fabrication du dispositif.

4. Dispositif selon l'une au moins des revendications 1 à 3, **caractérisé en ce que** le support de composants (30) présente, pour le contact électrique à force avec un élément de contact (150), une surface de contact (152) qui présente une plus grande étendue plate que l'élément de contact.

5. Dispositif selon l'une au moins des revendications 1 à 4, **caractérisé en ce que** le ou les capteurs de pression présentent, sur une première surface (112) frontale du ou des capteurs, un agencement de surfaces de contact avec des surfaces de contact isolées l'une de l'autre, par lequel une liaison électrique peut être formée sur le ou les capteurs avec des éléments de contact élastiques.

6. Dispositif selon la revendication 5, **caractérisé en ce que** sur la première surface frontale (112) du ou des capteurs de pression est disposé un contact central (113), dans la zone du centre de la surface frontale (112), et sur laquelle se trouvent au moins deux contacts périphériques (105) étendus en longueur, qui sont disposés le long de segments d'un cercle (114) ou le long de plusieurs cercles concentriques, autour d'un centre.

7. Dispositif selon l'une au moins des revendications 3 à 6, **caractérisé en ce que** l'élément de contact est un ressort spiral (150) cylindrique dont le diamètre est étagé une fois ou plusieurs fois.

8. Dispositif selon l'une des revendications précédentes, **caractérisé en ce que** plusieurs capteurs de pression sont réunis en un module (1) compact de par sa construction.

9. Dispositif selon l'une des revendications précédentes, **caractérisé en ce que** le ou les capteurs de pression sont ajoutés sur la première surface (17) de l'élément massif.

10. Dispositif selon la revendication 9, **caractérisé en ce que** le raccord est une liaison sertie.

11. Dispositif selon l'une au moins des revendications 1 à 10, **caractérisé en ce que** sur une deuxième surface (18) de l'élément massif, qui est disposée face à la première surface, est adjoint un moteur de pompe (8) et **en ce que** de la première unité de boîtier (11), un élément électrique (9) de mise en contact avec le moteur mène, par l'élément massif (12), vers le moteur de la pompe.

12. Dispositif selon les revendications 8 et 11,
**caractérisé en ce que** l'élément (9) de mise en contact avec le moteur est relié de manière fixe ou enfichable au boîtier (1) du module de capteur de pression.

13. Dispositif selon la revendication 12, **caractérisé en ce que** les connexions électriques de l'élément (9) de mise en contact avec le moteur et les connexions électriques du module de capteur de pression avec le ou les supports de composants, s'effectuent par l'intermédiaire d'éléments de contact (7, 21, 4, 5) qui sont guidés dans une zone (24) commune.

14. Dispositif selon la revendication 13, **caractérisé en ce que** les éléments de contact sont des liaisons enfichables constituées de broches et de douilles de contact (4, 5, 7, 21), les broches et/ou douilles étant reliées au boîtier (2) de l'élément (9) de mise en contact avec le moteur, et les liaisons enfichables pouvant coulisser dans une zone de surface (21) prédéfinie, parallèlement au plan de la première surface (17).

15. Dispositif selon la revendication 13 ou 14, **caractérisé en ce que** les éléments de contact (4, 5) sont disposés suivant une trame (23), parallèlement au plan de la première surface.

16. Dispositif selon l'une au moins des revendications 13 à 15, **caractérisé en ce que** les éléments de contact du module de capteur sont disposés dans le plan de la première surface, dans une zone (24) rectangulaire et les éléments de contact du moteur de la pompe sont disposés dans une deuxième zone (25), en particulier de forme circulaire, se trouvant à l'extérieur de la zone rectangulaire, la deuxième zone étant raccordée à un côté longitudinal (26) de la zone rectangulaire.

17. Dispositif selon l'une au moins des revendications 11 à 16, **caractérisé en ce que** l'élément de mise en contact avec le moteur comprend un ou plusieurs conducteurs électriques (6) et une isolation (27), le conducteur électrique étant guidé avec jeu à l'intérieur de l'isolation, à travers un évidement (28) pratiqué dans l'isolation, et le conducteur électrique étant en particulier un fil métallique rigide ou un ruban plat.

18. Dispositif selon l'une des revendications 11 à 17, **caractérisé en ce que** le ou les conducteurs électriques (6) dans l'élément de mise en contact avec le moteur sont reliés de manière électriquement conductrice aux broches ou douilles (7, 21) de contact du moteur, par des lignes flexibles ou par une feuille flexible (3) pourvue de pistes conductrices.
